# EUROPÄISCHE PATENTSCHRIFT

(11) **EP 2 878 211 B1**
(45) Veröffentlichungstag und Bekanntmachung des Hinweises auf die Patenterteilung: **28.08.2019**
(21) Anmeldenummer: 14194242.5
(22) Anmeldetag: 21.11.2014
(51) Int. Cl.: A23L 33/10, A23L 33/105, A23L 2/52, A23L 2/68, A23F 3/16

(54) **Verfahren zur Herstellung eines wasserlöslichen Gels zur Zubereitung eines trinkfertigen Getränks**
Method of manufacturing a water-soluble gel for preparing a beverage that is ready to drink
Procédé de fabrication d'un gel hydrosoluble destiné à la préparation d'une boisson prête à boire

(30) Priorität: 02.12.2013 CH 19842013
(43) Veröffentlichungstag der Anmeldung: 03.06.2015
(73) Patentinhaber: Domaco, 5426 Lengnau (CH)
(72) Erfinder: Huber, Silvia, 5426 Lengnau (CH)
(74) Vertreter: Tompkin, Christine

(56) Entgegenhaltungen:
- EP-A1- 1 117 304
- EP-A1- 2 233 051
- EP-A1- 2 653 494
- WO-A1-2010/052703
- FR-A1- 2 638 945
- KARIM A A ET AL: "Gelatin alternatives for the food industry: recent developments, challenges and prospects", TRENDS IN FOOD SCIENCE AND TECHNOLOGY, ELSEVIER SCIENCE PUBLISHERS, GB, Bd. 19, Nr. 12, 1. Dezember 2008 (2008-12-01), Seiten 644-656, XP025695190, ISSN: 0924-2244, DOI: 10.1016/J.TIFS.2008.08.001 [gefunden am 2008-08-12]

## Beschreibung

### Technisches Gebiet

Die Erfindung betrifft ein Verfahren zur Herstellung eines wasserlöslichen Gels.

### Stand der Technik

Gele zur einfachen Zubereitung eines Getränks fern von einer Küche, zum Beispiel unterwegs oder am Arbeitsplatz, sind bekannt. Sie werden in praktischen Formpackungen angeboten und können in Einzel- oder Mehrfachportionen konsumiert werden.

Es wird allgemein zwischen reversiblen und nicht-reversiblen Gelen unterschieden, indem reversible Gele in Wasser lösbar innert kurzer Zeit sind, also beispielsweise innerhalb einer Minute. Nicht-reversible Gele hingegen verbleiben bei Zugabe von Wasser fest und lösen sich allenfalls erst nach langer Zeit, also nach Stunden auf.

In DE 10228371 ist zum Beispiel ein Geleekonzentrat zur schnellen Zubereitung eines Tees offenbart. Das Geleekonzentrat wird durch ein Eindicken und Gelieren eines Tees oder einer Teemischung hergestellt. Entsprechend dem verwendeten Geliermittel kann ein heisser Tee oder auch ein kalter Tee zubereitet werden.

EP2095728 offenbart ein konzentriertes Gel zur Zubereitung eines Getränks gegen Müdigkeit, zum Beispiel für Sportler. Das Gel enthält spezifische Aminosäuren in spezifischen Gewichtsverhältnissen, die in elektrolysiertem geliertem Wasser gelöst werden. Das gelierte Wasser wird unter anderem mittels Carrageen, Gelatinen, Agar Agar und Alginaten bereit gestellt. Das Gel kann in Mineral- oder Quellwasser verdünnt konsumiert werden.

Aus WO2004/075669 ist ein nichtreversibles Gel bekannt zur direkten Konsumation ohne Verdünnung durch eine Flüssigkeit. Das Gel wird aufgrund eines Saftes hergestellt, zum Beispiel Frucht- oder Gemüsesaftes, der gemischt mit Carrageenan auf eine Geliertemperatur erhitzt, darauf schnell abgekühlt und schliesslich in konsumationsfertige Portionen abgefüllt wird. Süssstoffe können vor der Erhitzung der flüssigen Saft-Carrageenan-Mischung beigefügt werden, und die Konsistenz des Gels kann durch Variierung der Menge und des Typs des Carrageenans verändert werden. Als nicht-reversibles Gel lässt es sich mittels Wasser innert nützlicher Zeit nicht auflösen.

EP 1 117 304 offenbart eine hydrocolloide Süssigkeit, insbesondere sogenannte "sugar gels" oder "water gels", auch "gums" oder "jellies" genannt. Solche Süssigkeiten sind als Gummibärchen bekannt. Die Gummibärchen enthalten Wasser, Carrageen, Zucker, Glucosesirup, Säure sowie Farbe und Aroma und sind zum Verzehr durch Kauen und Lutschen gedacht. Es handelt sich um ein Produkt, das sich nicht spontan in Wasser auflösen soll.

WO 2010/052703 offenbart ein Verfahren zur Herstellung eines Gels, welches die Streichfähigkeit von Honig verbessern soll. Grundinhaltstoffe sind Honig und Carrageen, Pektin, eine Säure sowie Emulgatoren. Der Honig und das Carrageen werden zunächst auf 60°C erhitzt, worauf die Säure zugegeben und die Mischung erhitzt wird. Darauf wird das Pektin zugegeben und die Mischung weiter erhitzt. Darauf wird die Mischung in eine Form gegeben und gekühlt, um ein festes Gel zu erreichen. Insbesondere wird als Geliermittel einerseits ein schnell-gelierendes mit einem langsam-gelierenden Geliermittel kombiniert. Als sekundäres Ziel wurde das Auflösen in heissem Wasser beschrieben.

### Beschreibung der Erfindung

Der vorliegenden Erfindung ist die Aufgabe gestellt, ein Verfahren zur Herstellung eines reversiblen Gels zu schaffen, wobei mit dem daraus entstandenen Gel ein kaltes oder heisses, konsumfertiges Getränk durch Aufgiessen und Mischung mit kaltem oder heissem Wasser zubereitet werden kann. Das Verfahren soll im Vergleich zu den Verfahren des Standes der Technik insbesondere eine einfache und kostengünstige Herstellung ermöglichen, in welchem die aromatisierenden Bestandteile in der ursprünglichen Form erhalten bleiben.

Das Gel kann zur einfachen Zubereitung eines kalten oder heissen Getränks, zur bequemen Konsumation je nach Bedarf, unterwegs, am Arbeitsplatz oder sonst wo, verwendet werden.

Diese Aufgabe wird durch ein Verfahren gemäss Anspruch 1 und den davon abhängigen Ansprüchen gelöst.

Es ist ein Verfahren zur Herstellung eines in heissem als auch kaltem Wasser reversiblen Gels offenbart, das die folgenden Schritte a) bis f) aufweist:
a) Einrühren und Lösen von Carrageen und einer Zuckerart oder mehreren Zuckerarten in Wasser, wobei die Zuckerart Saccharose, Dextrose oder Isomaltulose enthält
b) Erhitzung der entstandenen Lösung unter Rühren bis zu dessen Siedepunkt,
c) Zugabe von Glucosesirup zur siedenden Lösung,
d) Zugabe einer Säure-Wasser-Lösung zur Vollendung einer Grundmasse, wobei der Anteil der Säure in der kochenden Masse in einem Bereich von 0.05 bis 1.0 % w/w liegt,
e) Zugabe von Aromen und/oder Pflanzenextrakten,
f) Abkühlung der Masse bis zur Abschliessung des Gelierprozesses.

In Schritt a) wird das Carrageen zusammen mit einer oder mehreren Zuckerart(en), wobei die Zuckerart Dextrose, Saccharose oder Isomaltulose enthält, in Wasser gelöst. Als Geliermittel werden zusätzlich zum Carrageen eines oder mehrere verschiedene Hydrokolloide verwendet, wie zum Beispiel Agar-Agar, Alginate, Furcellaran, Xanthane, Galactomannane, Stärken und deren Derivate. Die trockene Geliermittel-Zucker-Mischung, die auch eine Mischung von zwei oder mehreren der genannten Geliermittel enthalten kann, wird in Schritt b) in Wasser gelöst.

Die in Schritt a) entstandene Lösung wird in Schritt b) unter Rühren bis zum Kochen oder Siedepunkt erhitzt. Die Dauer der Erhitzung ist abhängig von dem gewählten Geliermittel oder Geliermittelmischung sowie auch der Grösse der zu erhitzenden Masse.

In Schritt c) wird anschliessend Glucosesirup dazugegeben und mit der in Schritt a) zugegebenen Zuckerart gemischt. Diese Mischung der beiden Zuckerarten mit dem Geliermittel bewirkt die für das Gel als Endprodukt notwendige Konsistenz.

In Schritt d) wird schliesslich durch die Zugabe einer Säure-Wasserlösung der pH-Wert der Masse gesenkt, wobei der Anteil der Säure in der kochenden Masse in einem Bereich von 0,05-1% w/w liegt. Die daraus entstehende Masse kann als Grundmasse bezeichnet werden und weist die notwendigen Eigenschaften auf, die eine Gelierung der Masse durch Abkühlen auf Raumtemperatur und danach eine rasche Wieder-Auflösung durch kaltes oder heisses Wasser durch den Konsumenten ermöglichen. Um die in Schritt a) zugefügten Anteile an Zuckerarten reduzieren zu können, werden nach Schritt d) und vor Schritt e) optional ein nicht-kalorigenes oder mehrere nicht-kalorigene Süssungsmittel zugegeben.

Durch die Verfahrensschritte a) bis d) wird eine Grundmasse hergestellt, aufgrund der eine Vielfalt verschiedener Getränke-Gele durch Zugabe von verschiedenen natürlichen oder künstlichen Aromen und/oder Pflanzenextrakten hergestellt werden können. Hierzu werden in Schritt e) die gewünschten Extrakte und Aromen gewählt. Pflanzenextrakte umfassen beispielsweise Extrakte aus Kräutern, Früchten, Samen, Blättern von Büschen wie zum Beispiel Rooibos oder Teepflanzen.

Zusätzlich können optional in Schritt e) ein färbender Stoff oder mehrere färbende Stoffe zur Masse gegeben werden.

Mögliche aus dem Gel rekonstituierte Getränke umfassen Kräutertee, Grüntee, Schwarztee, Rooibos- und Fruchtgetränke, Baby- und Kleinkindertees und - getränke, Eistee usw.

Nach Zugabe der Pflanzenextrakte zur noch heissen Masse, wird die Masse in geeignete Gefässe abgefüllt und darin auf Raumtemperatur abgekühlt, wodurch der Gelierprozess erfolgt.

Die Erfindung ermöglicht insbesondere eine einfache Herstellung eines sich in Wasser spontan auflösbaren, reversiblen Gels. Das Herstellungsverfahren erfordert insbesondere keinen Trocknungsvorgang. Es bleiben somit die natürlichen Aromastoffe in ihrer ursprünglichen Form erhalten und verleihen dem fertigen Getränk dadurch einen natürlichen und aromatisch gehaltvollen Geschmack. In einem Trocknungsvorgang hingegen würden sich die Aromastoffe zum Teil verflüchtigen.

Durch das erfindungsgemässe Herstellverfahren entsteht ein reversibles Gel, das sich bei Zugabe von kaltem oder heissem Wasser und gegebenenfalls unter leichtem Rühren oder durch das ledigliche Aufgiessen mit kaltem oder heissem Wasser in kurzer Zeit auflöst.

Das Gel ist zur Zubereitung von kalten Getränken durch Zugabe von kaltem Wasser, zum Beispiel Leitungswasser oder Mineralwasser, oder von gekochtem, heissen Getränken durch Zugabe von heissem Wasser geeignet. Es eignet sich als solches zur Zubereitung von trinkfertigen Getränken ohne die Zuhilfenahme von Küchengeräten oder -utensilien, sei dies zu Hause, am Arbeitsplatz drinnen und draussen, unterwegs auf der Reise oder auf einer Wanderung. Es eignet sich zudem insbesondere auch für Kinder- und Baby-Getränke.

In einer besonderen Ausführung wird Schritt a) in zwei Schritten durchgeführt, indem zunächst Carrageen als trockenes Geliermittel, mit einer oder mehreren Zuckerart(en), wobei die Zuckerart Saccharose, Dextrose oder Isamaltulose enthält, vermischt wird. Die entstandene Trockenmischung wird sodann in Wasser eingerührt und gelöst. Die vorgängige trockene Mischung erleichtert den Lösungsvorgang und verhindert allfällige Klumpenbildung.

In einer weiteren Ausführung des erfindungsgemässen Verfahrens wird nach Schritt d) oder nach Schritt e), jedoch vor dem Schritt f) ein zusätzlicher Verfahrensschritt durchgeführt, bei dem der Masse, die aus den vorgängigen Schritten entstanden ist, ein Konservierungsmittel zugegeben wird oder eine Pasteurisation der Masse durchgeführt wird. Dieser zusätzliche Schritt wird also vor dem Schritt f) des Abkühlens der Masse durchgeführt. Als Konservierungsmittel wird zum Beispiel ein Sorbat, beispielsweise ein Kaliumsorbat quantis satis dazugegeben. ("quantis satis" - so viel wie nötig, so wenig wie möglich).

Das Gel ist ein fertiges, zur Verwendung durch den Konsumenten bereites, reversibles Gel, das durch Aufgiessen mit kaltem oder heissem Wasser vollständig aufgelöst werden kann. Es enthält ein Carrageen, Glucose, sowie eine oder mehrere Zuckerarten, wobei die Zuckerart Saccharose, Dextrose oder Isomaltulose ist, Wasser, eine Säure sowie ein Aroma oder mehrere Aromen und/oder eines oder mehrere Pflanzenextrakte sowie optional färbende Stoffe, wobei das fertige Gel durch die Zugabe der Säure-Wasser-Lösung einen Säuregehalt im Bereich von 0.05-1.0% w/w enthält.

Eine Ausführung des Gels enthält zusätzlich ein oder mehrere nicht-kalorigene Süssungsmittel.

Eine besondere Ausführung des Gels enthält Carrageen als Geliermittel, Saccharose als Zuckerart, Wasser, Glucosesirup, eine Säure bei einem Gehalt von 0.05 bis 1.0 % w/w sowie Aromen und /oder Pflanzenextrakte und/oder färbende Stoffe.

### Ausführungsbeispiele der Erfindung

In einer Ausführung der Erfindung werden Geliermittel und eine oder mehrere Zuckerart(en) trocken miteinander vermischt, wobei das Geliermittel Carrageen als Hydrokolloid enthält und die Zuckerart Sacchaorse, Dextrose oder Isamaltulose enthält.

In einer Ausführung wird das Carrageen und Saccharose als Zuckerart in einem Gewichtsverhältnis von 1% bis 3% w/w trocken miteinander vermischt. In einem besonderen Ausführungsbeispiel beträgt das Mischverhältnis 0.1 bis 1.0% w/w.

In einer Variante wird Carrageen und Dextrose (Traubenzucker) oder Isomaltulose trocken vermischt. Mit Isomaltulose kann insbesondere ein zahnschonendes Getränk von geringerer Süsse hergestellt werden, da Isomaltulose von den menschlichen Mundbakterien nicht abgebaut werden kann und die Süsskraft von Isomaltulose rund 50% derjenigen von Saccharose beträgt.

In einer Variante können auch zusätzlich zum Carrageen folgende Geliermittel oder Mischungen von mehreren verwendet werden:
Agar-Agar,
Alginate, Furcellaran, Xanthane Galactomannane,
Stärken und Derivate davon.

Das Trocken-Gemisch wird sodann langsam unter Rühren zum Kochen gebracht.

Zur kochenden, siedenden Lösung wird sodann Glucosesirup dazugegeben.

Zur Vollendung der Grundmasse wird nun die Säure-Wasserlösung beigemischt, wobei die Säure und das Wasser der Lösung beispielsweise in einem Verhältnis von beispielsweise 1:1 bis 1:5 enthalten sind. Diese wird zur kochenden Masse beigemischt, wozu die Masse gegebenenfalls vorgängig noch einmal aufgekocht wird. Der Anteil an Säure in der kochenden Masse liegt somit in einem Bereich von 0.05 bis 1.0 % w/w, wodurch der pH-Wert soweit gesenkt wird, um die optimale Gelierung zu ermöglichen.

Wird der Anteil an Zuckerarten reduziert, können zusätzlich ein oder mehrere nicht-kalorigene Süssungsmittel beigemengt werden. In einem weiteren Schritt wird die Grundmasse aromatisiert durch Zugabe von einem oder mehrere Aromen und/oder einem oder mehreren Pflanzenextrakten aus Kräutern, Früchten, Samen, Blättern oder Stengeln von Büschen und/oder Teepflanzen in flüssiger, konzentrierter oder pulveriger Form oder als ätherisches Öl dazugegeben.

Um dem Getränk eine ansprechende Farbe zu verleihen, werden in einem weiteren Schritt als Variante des Verfahrens eine oder mehrere farbgebende Komponenten beigemengt.

In einer Variante werden zur Grundmasse Zusatz-Nährstoffe wie Mineralstoffe, Vitamine oder andere ernährungsphysiologisch bedeutende Stoffe dazugegeben.

Die Masse wird schliesslich vorzugsweise bei 65-70°C in geeignete Formgefässe abgefüllt, wie zum Beispiel portionierte Formen für ein oder mehrere Getränkeportionen und darin abgekühlt bis der Gelierprozess bei Raumtemperatur abgeschlossen ist.

Das Gel, hergestellt nach dem erfindungsgemässen Herstellverfahren ist ein reversibles Gel, das durch Zugabe von kaltem oder heissem Wasser einfach aufzulösen ist. Das Gel lässt sich mit Wasser von 8-30°C in kurzer Zeit vollständig auflösen, um rasch ein trinkfertiges kaltes Getränk zuzubereiten. Es lässt sich gleichsam mit heissem Wasser von 30-80 °C auflösen, um ein heisses Getränk zu erhalten.

Das resultierende reversible Gel enthält ein oder mehrere Geliermittel, wobei das Geliermittel Carrageen enthält, eine oder mehrere Zuckerarten, wobei die Zuckerart Saccharose, Dextrose oder Isomaltulose enthält, Wasser, Glucosesirup, eine Säure sowie ein Aroma oder mehrere Aromen und/oder eines oder mehrere Pflanzenextrakte, wobei das fertige, zur Verwendung bereite, reversible Gel einen Säuregehalt von 0.05 - 1.0% w/w enthält.

Zudem enthält ein Beispiel des reversiblen Gels einen Zuckeranteil von 50-90% w/w, wobei die Zuckerart Saccharose, Dextrose oder Isomaltulose enthält.

In einem weiteren Beispiel enthält das Gel ein oder mehr Geliermittel in einem Bereich von 0.1 bis 3.0 % w/w, wobei das Geliermittel Carrageen enthält.

In einem besonderen Beispiel enthält das Gel Carrageen als Geliermittel in einem Bereich von 0.1 bis 2.0 % w/w, eine Säure im Bereich von 0.05 bis 1.0% w/w, Saccharose und Glucosesirup als Zuckerarten in einem Bereich von 50-90 % w/w. Aromen und /oder Pflanzenextrakte, und optional einen färbenden oder mehrere färbende Stoffe sowie Wasser.

In einem weiteren Beispiel enthält das Gel Carrageen als Geliermittel in einem Bereich von 0.1 bis 2.0 % w/w, beispielsweise 0.8% w/w, Isomaltulose als Zuckerart, eine Säure im Bereich von 0.05-1.0% w/w, Glucosesirup, und Wasser, wobei die Zuckerarten Isomaltulose und Glucosesirup zusammen zu 50-90 % w/w, beispielsweise 75-85 % w/w oder 75-80% enthalten sind.

Aromen und /oder Pflanzenextrakte, und optional einen färbenden Stoff oder mehrere färbende Stoffe sowie Wasser.

Ein weiteres Beispiel des Gels enthält anstelle eines Teils der Zuckerarten ein nicht-kalorigenes oder mehrere nicht-kalorigene Süssungsmittel.

## Patentansprüche

1. Verfahren zur Herstellung eines in heissem als auch kaltem Wasser reversiblen Gels zur Zubereitung eines Getränks, wobei das Gel in Wasser von 8-80°C vollständig löslich ist,
**dadurch gekennzeichnet, dass**
das Verfahren die Schritte aufweist:
a) Einrühren und Lösung von Carrageen und einer Zuckerart oder mehrerer Zuckerarten in Wasser, wobei die Zuckerart Saccharose, Dextrose oder Isomaltulose enthält,
b) Erhitzung der entstandenen Lösung unter Rühren bis zu dessen Siedepunkt,
c) Zugabe von Glucosesirup zur siedenden Lösung,
d) Zugabe einer Säure-Wasser-Lösung zur Vollendung einer Grundmasse, wobei der Anteil der Säure in der kochenden Masse in einem Bereich von 0.05 bis 1.0 % w/w liegt,
e) Zugabe von Aromen und/oder Pflanzenextrakten und/oder färbenden Stoffen
f) Abkühlung der Masse auf Raumtemperatur bis zur Abschliessung des Gelierprozesses.

2. Verfahren zur Herstellung eines Gels nach Anspruch 1
**dadurch gekennzeichnet, dass**
vor dem Einrühren und Lösen des Geliermittels und der Zuckerart in Wasser, das Geliermittel und die Zuckerart zu einer Trocken-Mischung vermengt werden.

3. Verfahren zur Herstellung eines Gels nach Anspruch 1 oder 2
**dadurch gekennzeichnet, dass**
das Geliermittel zudem eines oder mehrere
verschiedene Hydrokolloide wie Agar-Agar, Alginate, Furcellaran Xanthane, Galactomannene, Stärken und deren Derivaten enthält.

4. Verfahren zur Herstellung eines Gels nach einem der vorangehenden Ansprüche 1 bis 3
**dadurch gekennzeichnet, dass**
nach Schritt d) und vor Schritt e) ein nicht-kalorigenes oder mehrere nicht-kalorigene Süssungsmittel zugegeben werden.

5. Verfahren zur Herstellung eines Gels nach einem der vorangehenden Ansprüche 1 bis 4
**dadurch gekennzeichnet, dass**
die in Schritt e) zugegebenen Pflanzenextrakte Extrakte aus Kräutern, Früchten, Samen, Blättern oder Stengeln von Büschen, Rooibos oder Teepflanzen enthalten.

6. Verfahren zur Herstellung eines Gels nach einem der vorangehenden Ansprüche 1 bis 5
**dadurch gekennzeichnet, dass**
in Schritt e) weitere aromatisierende Stoffe beigemischt werden.

7. Verfahren zur Herstellung eines Gels nach einem der vorangehenden Ansprüche 1 bis 6
**dadurch gekennzeichnet, dass**
in Schritt e) zusätzlich ein färbender oder mehrere färbende Stoffe beigemischt werden.

8. Verfahren zur Herstellung eines Gels nach einem der vorangehenden Ansprüche 1 bis 7
**dadurch gekennzeichnet, dass**
nach Schritt d) und vor Schritt f) Mineralstoffe oder Vitamine beigemischt werden.

9. Verfahren zur Herstellung eines Gels nach einem der vorangehenden Ansprüche 1 bis 8
**dadurch gekennzeichnet, dass**
nach Schritt d) oder e) der durch die vorangehenden Schritte entstandene Masse ein Konservierungsmittel zugegeben wird oder die Masse pasteurisiert wird, wobei die Zugabe des Konservierungsmittels oder die Pasteurisierung der Masse vor Schritt f) durchgeführt wird.

10. Verfahren zur Herstellung eines Gels nach einem der vorangehenden Ansprüche 1 bis 9
**dadurch gekennzeichnet, dass**
die Masse in Schritt f) bei 65-70°C in Formgefässe abgefüllt wird.

## Claims

1. A method for producing a gel for the preparation of a beverage, said gel being reversible in hot and also cold water, wherein the gel is completely soluble in water from 8-80°C,
**characterised in that**
the method comprises the following steps:
a) stirring and dissolving carrageenan and a type of sugar or a plurality of types of sugar in water, wherein the sugar type contains sucrose, dextrose or isomaltulose,
b) heating the resultant solution to its boiling point, whilst stirring,
c) adding glucose syrup to the boiling solution,
d) adding an acid-water solution until a basic mass is achieved, wherein the proportion of acid in the boiling mass lies in a range of from 0.05 to 1.0% w/w,
e) adding flavourings and/or plant extracts and/or colorants,
f) cooling the mass to room temperature until the gelling process is complete.

2. The method for producing a gel according to claim 1,
**characterised in that**
before the gelling agent and the sugar type are stirred and dissolved in water, the gelling agent and the sugar type are blended to form a dry mixture.

3. The method for producing a gel according to claim 1 or 2,
**characterised in that**
the gelling agent additionally contains one or more different hydrocolloids, such as agar agar, alginates, furcelleran, xanthans, galactomannans, starches and derivatives thereof.

4. The method for producing a gel according to any one of claims 1 to 3,
**characterised in that**
after step d) and before step e) a non-caloric sweetener or a plurality of non-caloric sweeteners is/are added.

5. The method for producing a gel according to any one of claims 1 to 4,
**characterised in that**
the plant extracts added in step e) contain extracts from herbs, fruits, seeds, leaves or stems of bushes, rooibos, or tea plants.

6. The method for producing a gel according to any one of claims 1 to 5,
**characterised in that**
in step e) further flavouring substances are admixed.

7. The method for producing a gel according to any one of claims 1 to 6,
**characterised in that**
in step e) a colouring substance or a plurality of colouring substances is/are additionally admixed.

8. The method for producing a gel according to any one of claims 1 to 7,
**characterised in that**
after step d) and before step f) mineral substances or vitamins are admixed.

9. The method for producing a gel according to any one of claims 1 to 8,
**characterised in that**
after step d) or e) a preservative is added to the mass created as a result of the preceding steps or the mass is pasteurised, wherein the preservative is added or the mass is pasteurised prior to step f).

10. The method for producing a gel according to any one of claims 1 to 9,
**characterised in that**
in step f) the mass is filled into mould vessels at 65-70°C.

## Revendications

1. Procédé de fabrication d'un gel réversible dans l'eau chaude et froide pour la préparation d'une boisson, le gel étant entièrement soluble dans l'eau de 8 à 80 °C, **caractérisé en ce que**
le procédé comprend les étapes consistant à :
a) délayer et dissoudre du carraghénane et un type de sucre ou plusieurs types de sucre dans de l'eau, le type de sucre comprenant du saccharose, du dextrose ou de l'isomaltulose,
b) chauffer la solution obtenue en agitant jusqu'à son point d'ébullition,
c) ajouter du sirop de glucose à la solution en ébullition,
d) ajouter une solution acide-eau pour compléter une composition de base, la proportion d'acide dans la composition bouillante étant comprise dans une plage de 0,05 à 1,0 % p/p,
e) ajouter des arômes et/ou des extraits de plantes et/ou des substances colorantes,
f) refroidir la composition à température ambiante jusqu'à achèvement du processus de gélification.

2. Procédé de fabrication d'un gel selon la revendication 1, **caractérisé en ce qu'**avant que l'agent gélifiant et le type de sucre ne soient délayés et dissous dans l'eau, l'agent gélifiant et le type de sucre sont mélangés pour former un mélange sec.

3. Procédé de fabrication d'un gel selon la revendication 1 ou 2, **caractérisé en ce que** l'agent gélifiant contient en outre un ou plusieurs hydrocolloïdes différents tels qu'agar-agar, alginates, furcellarane, gomme xanthane, galactomannanes, amidons et leurs dérivés.

4. Procédé de fabrication d'un gel selon l'une des revendications 1 à 3 précédentes, **caractérisé en ce qu'**un ou plusieurs édulcorants non calorigènes sont ajoutés après l'étape d) et avant l'étape e).

5. Procédé de fabrication d'un gel selon l'une des revendications 1 à 4 précédentes, **caractérisé en ce que** les extraits de plantes ajoutés à l'étape e) comprennent des extraits d'herbes, de fruits, de graines, de feuilles ou de tiges d'arbustes, de rooibos ou de plantes à thé.

6. Procédé de fabrication d'un gel selon l'une des revendications 1 à 5 précédentes, **caractérisé en ce que** d'autres substances aromatisantes sont ajoutées à l'étape e).

7. Procédé de fabrication d'un gel selon l'une des revendications 1 à 6 précédentes, **caractérisé en ce qu'**une ou plusieurs substances colorantes sont ajoutées en plus à l'étape e).

8. Procédé de fabrication d'un gel selon l'une des revendications 1 à 7 précédentes, **caractérisé en ce que** des minéraux ou des vitamines sont ajoutés après l'étape d) et avant l'étape f).

9. Procédé de fabrication d'un gel selon l'une des revendications 1 à 8 précédentes, **caractérisé en ce qu'**après l'étape d) ou e), un agent de conservation est ajouté à la composition produite par les étapes précédentes ou la composition est pasteurisée, l'ajout de l'agent de conservation ou la pasteurisation de la composition étant effectué(e) avant l'étape f).

10. Procédé de fabrication d'un gel selon l'une des revendications 1 à 9 précédentes, **caractérisé en ce que** la composition de l'étape f) est transvasée dans des récipients de mise en forme à 65-70 °C.
